Europäisches Patentamt

**European Patent Office**

Office européen des brevets

(19)

(11) Numéro de publication : **0 019 256**

**B1**

(12) **FASCICULE DE BREVET EUROPÉEN**

(45) Date de publication du fascicule du brevet :
**15.12.82**

(51) Int. Cl.³ : **F 16 L 21/02, B 22 D 13/02, B 21 D 41/04**

(21) Numéro de dépôt : **80102624.6**

(22) Date de dépôt : **12.05.80**

(54) **Tuyau en fonte ductile à emboîtement.**

(30) Priorité : **17.05.79 FR 7912559**

(43) Date de publication de la demande :
**26.11.80 (Bulletin 80/24)**

(45) Mention de la délivrance du brevet :
**15.12.82 Bulletin 82/50**

(84) Etats contractants désignés :
**AT CH DE GB IT LI**

(56) Documents cités :
**FR A 642 202**
**FR A 2 278 429**
**GB A 817 855**
**US A 3 064 983**
**US A 3 196 819**
**US A 3 977 227**

(73) Titulaire : **PONT-A-MOUSSON S.A.**
**91, Avenue de la Libération**
**F-54017 Nancy (FR)**

(72) Inventeur : **Pierrel, Michel**
**3, rue du Président Coty**
**F-54700 Pont-à-Mousson (FR)**
Inventeur : **Fuminier, Claude Barthélémy**
**63, rue du Bois le Prêtre**
**F-54700 Pont-à-Mousson (FR)**

(74) Mandataire : **Well, Roger et al**
**c/o Centre de Recherches de Pont-à-Mousson BP 28**
**F-54700 Pont-à-Mousson (FR)**

Jouve, 18, rue St-Denis, 75001 Paris, France

Tuyau en fonte ductile à emboîtement

La présente invention est relative aux tuyaux ou pièces tubulaires en fonte ductile ou fonte à graphite sphéroïdal obtenus par coulée centrifuge et munis d'un emboîtement d'extrémité présentant une surface interne lisse et un rétrécissement à son entrée.

Les emboîtements de ce type dans lesquels le rétrécissement est réalisé sous la forme d'un collet rabattu ou d'un rétreint sont connus pour les tubes d'acier, les tubes d'aluminium et les tubes en matière plastique. Le collet rabattu ou le rétreint peut être réalisé par déformation à chaud ou à froid. Le collet peut également être obtenu par moulage et être rapporté et fixé solidement à l'extrémité de l'emboîtement qui n'est pas déformé. Dans le cas de la déformation, l'emboîtement à collet est en une seule pièce. Dans le cas du moulage séparé du collet, l'emboîtement est en deux pièces.

Un tel collet ou rétreint d'extrémité d'emboîtement délimite dans l'emboîtement un logement pour une garniture d'étanchéité de forme simple, par exemple torique ou prismatique, dans un assemblage de tuyaux, et empêche l'expulsion de cette garniture en cas de surpression du fluide contenu dans la conduite. Il peut également contribuer, dans les cas des tubes en matière plastique, à rigidifier l'emboîtement, donc à conserver ses dimensions, ce qui facilite l'assemblage.

La technique antérieure est illustrée par exemple par le brevet US-A-3 064 983 qui montre un tube d'acier à emboîtement à profil courbe présentant un rétrécissement à son entrée. Cet emboîtement est obtenu par un procédé de forgeage.

Pour les produits tubulaires en fonte ductile, moulés par centrifugation, la technique antérieure est illustrée par le brevet US-A-3 977 227 qui montre une partie intermédiaire ainsi qu'une extrémité rétreinte par forgeage par compression axiale, avec augmentation d'épaisseur de la partie rétreinte, c'est-à-dire réduite en diamètre, modification de la structure de la fonte par aplatissement des nodules de graphite, et nécessite de restaurer la ductilité de la partie forgée au moyen d'un traitement thermique.

Un tuyau en fonte ductile à emboîtement est habituellement moulé par centrifugation avec un noyau donnant la forme de l'emboîtement et, en particulier, un épaulement circulaire interne à l'entrée de l'emboîtement. Ainsi moulé, l'emboîtement a une épaisseur de paroi nettement plus forte que celle de la partie courante ou fût du tuyau, et, par suite des tolérances dimensionnelles ou défauts éventuels de moulage, nécessite parfois un travail de finition par enlèvement de matière.

Le problème, pour un tuyau en fonte ductile, est d'obtenir par déformation un emboîtement plus léger, à paroi mince et lisse de même épaisseur que celle du fût, avec suppression du travail précité de finition.

Mais en outre et surtout le problème, pour la fonte ductile, consiste à conserver lors de la déformation et après celle-ci la structure à graphite sphéroïdal, c'est-à-dire la forme arrondie des nodules de graphite sans déformation de ceux-ci, sans aplatissement ni rupture ou déchirure. Précisément, le risque est élevé de provoquer par déformation des ruptures ou déchirures de la surface extérieure de l'emboîtement dans la zone de flexion ou de pliage maximal de la paroi mince de l'emboîtement si l'on cherche à obtenir une forme analogue à celle décrite dans le brevet US-A-3 064 983.

Suivant l'invention, ce problème est résolu et ce risque est évité en moulant par centrifugation à l'aide d'un noyau d'emboîtement une préforme d'emboîtement d'épaisseur constante, à parties courbes et a évasement tronconique, puis en recourbant par déformation ledit évasement tronconique en raccordant tangentiellement la courbure obtenue par déformation à celle obtenue initialement par moulage dans la zone où la flexion est maximale, de sorte que le graphite de la fonte reste sphéroïdal et que la ductilité est conservée sans avoir recours à un traitement thermique de restauration.

Le caractère de la présente invention ainsi que les caractéristiques spécifiques de celle-ci apparaîtront mieux de la description qui va suivre.

Au dessin annexé, donné uniquement à titre d'exemple,

la figure 1 est une demi-vue en coupe méridienne d'un tuyau en fonte ductile à emboîtement suivant l'invention ;

la figure 2 est une demi-vue partielle en coupe méridienne d'une préforme d'emboîtement obtenue par moulage centrifuge ;

la figure 3 est une demi-vue schématique illustrant le rétreint de la préforme moulée de la fig. 2 ;

la figure 4 est une demi-vue en coupe d'un assemblage étanche entre le bout mâle d'un tuyau et l'emboîtement du tuyau de la fig. 1 ;

les figures 5 et 6 sont des micrographies au grossissement 300 illustrant la structure de l'emboîtement respectivement au bord extérieur et au bord intérieur de la zone de l'emboîtement où la contrainte de flexion est maximale ;

la figure 7 est une micrographie au même grossissement d'un point situé au bord extérieur de l'entrée de l'emboîtement, dans une partie de l'emboîtement déformée mais non située dans la zone de flexion maximale ;

la figure 8 est une micrographie au même grossissement montrant la structure en un point pris au bord extérieur dans la partie non déformée de l'emboîtement.

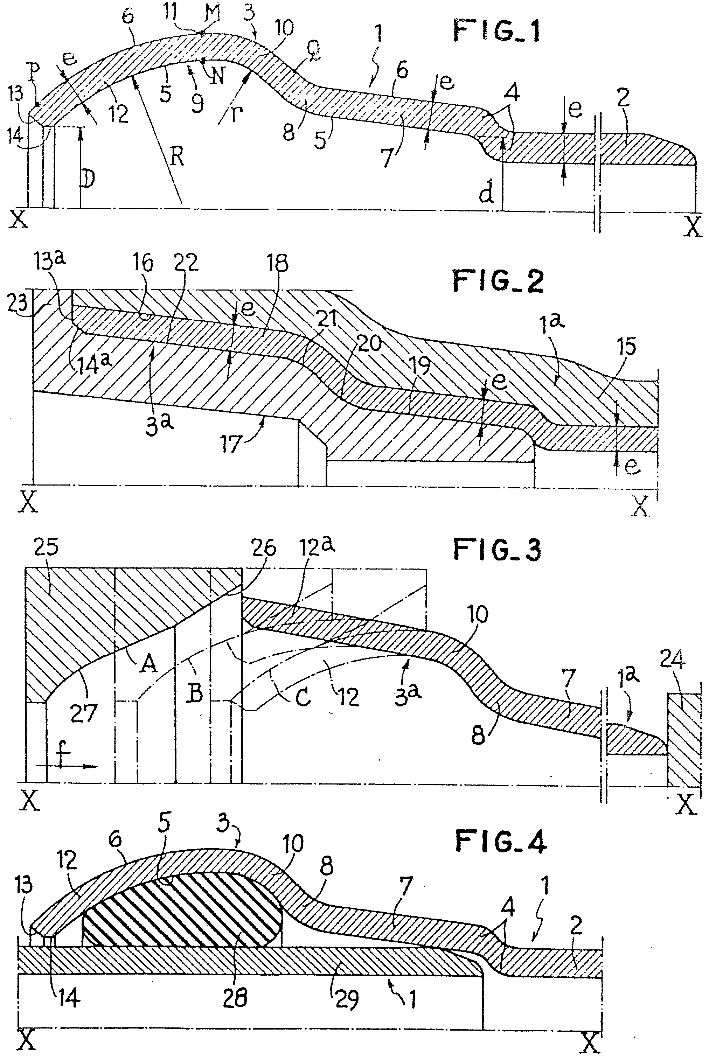

Le tuyau 1 en fonte à graphite sphéroïdal ou fonte ductile de la fig. 1, moulé par centrifugation autour d'un axe X-X, comporte un fût 2 de grande longueur, dont on ne voit qu'une faible partie, avec interruption, et un emboîtement 3 raccordé au fût par des arrondis 4 de faible rayon de courbure et de concavité opposées.

L'emboîtement 3, qui a en tous ses points sensiblement la même épaisseur de paroi e que le fût 2, présente une surface intérieure 5 et une surface extérieure 6 entièrement lisses et dépourvues d'arête. Cet emboîtement comporte plusieurs parties successives décrites ci-après, du fond vers l'entrée.

Au fond de l'emboîtement, une partie 7 tronconique, divergente vers l'extérieur de l'emboîtement suivant un angle relativement faible, se raccorde aux arrondis 4. A cette partie 7 se raccorde par un large arrondi concave 8 un logement 9 d'entrée de l'emboîtement destiné à recevoir une garniture d'étanchéité.

Le logement 9 est lui-même constitué de deux parties successives à profil courbe convexe :
— une partie 10 s'étendant de l'arrondi 8 au cercle 11 de plus grand diamètre de l'emboîtement et dont le rayon de courbure r est modéré. Ce rayon r est un multiple de l'épaisseur e, par exemple de l'ordre de 3e ;
— une partie 12 s'étendant du cercle 11 à l'entrée de l'emboîtement et se raccordant tangentiellement à la partie 10. Le rayon de courbure R de cette partie 12 est nettement supérieur au rayon de courbure r défini plus haut.

La tranche d'extrémité 13 de la partie 12 est tronconique, convergente vers le fond de l'emboîtement et à peu près perpendiculaire aux extrémités libres des surfaces 5 et 6. Cette tranche 13 se termine, à son extrémité de petit diamètre, par un court cylindre 14 d'axe X-X dont le diamètre D est sensiblement inférieur au diamètre maximal de l'emboîtement mais au moins égal au plus petit diamètre d de l'évasement tronconique 7.

Les deux parties 10 et 12 de l'entrée de l'emboîtement forment ainsi un profil dissymétrique à deux courbures, l'une relativement forte pour la partie intérieure 10, l'autre très faible pour la partie extérieure 12. Le profil des deux parties 10 et 12, c'est-à-dire de l'emboîtement 3 au voisinage de son entrée, pourrait être comparé à celui d'un pavillon aérodynamique d'automobile.

Pour obtenir l'emboîtement 3 décrit ci-dessus, on procède de la manière suivante (fig. 2 et 3) :
— on moule par coulée centrifuge un tuyau 1ᵃ muni à une extrémité d'une préforme d'emboîtement 3ᵃ ;
— on donne à la préforme, après démoulage, son profil définitif d'emboîtement par compression axiale et flexion simultanées à l'aide d'une matrice ayant au moins en partie le profil désiré.

Suivant l'exemple d'exécution de la fig. 2, le tuyau 1ᵃ est obtenu au moyen d'un moule de centrifugation métallique ou coquille 15 offrant à son extrémité à emboîtement une empreinte creuse qui définit exactement le profil extérieur des arrondis 4, de l'évasement 7, de l'arrondi 8 et de la partie 10 du tuyau 1. Toutefois, légèrement avant d'atteindre le cercle 11, l'empreinte de la coquille devient un tronc de cône 16 qui diverge jusqu'à son extrémité libre à peu près suivant le même angle que l'évasement 7, ce qui confère à la préforme d'emboîtement 3ᵃ un profil en S très allongé.

Dans cette extrémité de la coquille 15 est fixé d'une manière connue et non représentée un noyau creux 17 d'emboîtement solidaire en rotation de la coquille 15. Le profil de la surface extérieure du noyau 17 correspond à celui de l'empreinte intérieure de la coquille et ménage avec celle-ci un espace annulaire 18 dont la largeur, mesurée dans une direction à peu près radiale, est constante et correspond à l'épaisseur e du tuyau 1 à obtenir. Du fond vers l'entrée de l'emboîtement, le noyau creux 17 présente ainsi une extrémité ou un nez tronconique 19 à extrémité arrondie qui correspond à l'évasement 7 du tuyau, un raccordement concave 20 qui correspond à l'arrondi 8, un second raccordement 21 convexe qui correspond à la partie 10, un évasement tronconique 22 correspondant à la seconde partie tronconique 16 de la coquille, et une bride extérieure radiale 23 de fixation sur la coquille donnant la tranche d'extrémité 13ᵃ de la préforme 13 intérieurement chanfreinée en 14ᵃ.

Par centrifugation, on coule donc dans la coquille 15 munie de son noyau 17 un tuyau 1ᵃ à préforme d'emboîtement 3ᵃ, puis on démoule. La préforme 3ᵃ (fig. 2 et 3) présente à son entrée un évasement tronconique 12ᵃ suivi de la partie courbe 10, de l'arrondi 8 de raccordement et de l'évasement 7.

Après refroidissement, le tuyau 1ᵃ est mis en place dans une presse, par exemple horizontale (mais qui pourrait être verticale) dont le bâti n'est pas représenté. Cette presse comporte un plateau fixe 24 contre lequel vient buter la tranche d'extrémité du bout mâle du fût 2, et une matrice 25 fixée sur un vérin non représenté, du type à vis ou à fluide sous pression, placée près de la tranche d'extrémité de la préforme d'emboîtement 3ᵃ (fig. 3). La matrice 25 présente une entrée 26 tronconique largement évasée ayant un diamètre d'entrée supérieur au diamètre extérieur de la tranche d'extrémité de la préforme 3ᵃ. Cette entrée converge jusqu'à son raccordement, avec une transition appropriée, avec une paroi concave à profil courbe 27 de diamètre décroissant dont la courbure est celle de la seconde partie 12 de l'emboîtement 3 à obtenir.

A l'aide de cette presse, en actionnant le vérin de la matrice 25, on peut déplacer lentement celle-ci suivant l'axe X-X dans le sens de la flèche f, le plateau 24 étant fixe. On exerce ainsi simultanément sur la préforme 3ᵃ une compression axiale et une flexion progressive. Sous cette action, la préforme évolue progressivement vers la forme définitive de l'emboîtement 3 de la manière suivante.

La matrice 25 engage son entrée 26 sur la tranche d'extrémité de la préforme 3ᵃ (fig. 3 : position A en traits pleins) sans la déformer à l'origine. Puis, en progressant, la matrice exerce sur la tranche d'extrémité 13ᵃ une poussée axiale qui est accompagnée d'un effort de flexion vers l'axe X-X. Cet effort de flexion progressif et lent imprime une courbure croissante aux génératrices rectilignes de la surface tronconique 12ᵃ (position B en traits mixtes). En poursuivant son avance, la matrice 25 fait pénétrer l'extrémité de la préforme 3ᵃ dans la cavité à profil courbe 27. La poussée axiale continue donc à exercer un effort périphérique de flexion sur tout le pourtour de la préforme, dont l'évasement tronconique 12ᵃ finit par épouser complètement la courbure de la cavité 27 (position C en traits mixtes). A ce moment, la matrice 25 s'arrête du fait du réglage de la course de son vérin moteur. Le tuyau 1 de la fig. 1 est alors terminé.

On constate que :

— la première partie courbe 10 moulée de l'emboîtement n'a subi aucune déformation, sauf au voisinage immédiat du cercle 11 ;

— la contrainte maximale de flexion a été exercée sur une zone circulaire située au raccordement de la première partie courbe 10 de la préforme 3ᵃ et de l'emboîtement 3, et de la seconde partie initialement tronconique 12ᵃ de la préforme 3ᵃ, maintenant devenue courbe suivant le profil 12. Aucune déchirure ni fissure n'est apparue sur cette zone de flexion maximale, qui se confond avec le cercle 11 de diamètre maximal de l'emboîtement. On attribue ce bon résultat au fait que l'effort de flexion radiale exercé par la matrice 25 est constamment accompagné d'un effort de compression axiale suivant la flèche f.

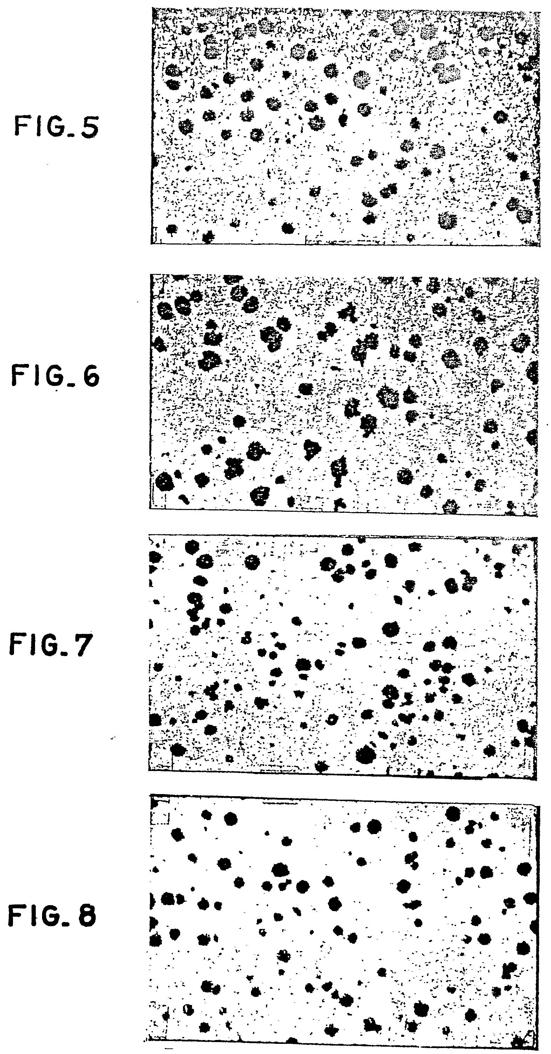

Des micrographies au grossissement 300 ont été prises au bord extérieur (point M, fig. 5) et au bord intérieur (point N, fig. 6) de la zone de flexion maximale. Ces micrographies montrent qu'il y a en ces points ni fissure, ni déchirure dans la paroi, et que le graphite est resté sphéroïdal.

Une autre micrographie (fig. 7) a été prise en un point P situé au bord extérieur de l'entrée de l'emboîtement 3, qui a subi une déformation de plus grande amplitude que les points M et N mais à moindre contrainte de flexion. Le graphite est également resté sphéroïdal.

Enfin, une micrographie (fig. 8) a été prise en un point Q situé au bord extérieur de la partie 10 non déformée. Elle montre la structure à graphite sphéroïdal obtenue par coulée centrifuge et sert de référence et de comparaison aux autres micrographies.

L'ensemble des micrographies des fig. 5 à 8 montre que la structure d'origine à graphite sphéroïdal du tuyau centrifugé n'a pas souffert de la déformation exercée à froid dans la presse 24-25.

A la fig. 4 est illustré un assemblage étanche entre deux tuyaux en fonte ductile tels que le tuyau 1. Cet assemblage est de type connu à garniture à compression radiale.

Une garniture d'étanchéité 28, torique à l'état libre, est logée dans le logement 9 de l'entrée de l'emboîtement 3 d'un des deux tuyaux, en appui élastique contre la partie courbe 10 venue de moulage et contre la partie courbe 12 obtenue par formage. Le bout mâle 29 de l'autre tuyau pénètre dans la garniture 28, en traversant avec un faible jeu radial le cylindre d'entrée 14, et à l'intérieur de la surface évasée 7, jusqu'à ce qu'il bute contre le fond de l'emboîtement (partie intérieure de la surface 7 ou arrondis 4). La garniture 28 est écrasée radialement entre le bout mâle 29 et l'emboîtement 3 et se trouve pratiquement emprisonnée dans cette position du fait de sa butée contre la paroi 10 et du faible espace annulaire restant libre entre l'entrée de l'emboîtement et la surface extérieure du bout mâle 29.

Dans l'exemple ci-dessus, le formage à la presse de l'emboîtement 3 a été exercé sur la préforme 3ᵃ à froid. Cependant, ce formage peut être également exercé à chaud par la même presse en chauffant à l'aide d'un manchon approprié la partie tronconique 12ᵃ de la préforme 3ᵃ, la partie voisine 10, non destinée à être déformée, restant froide.

**Revendications**

1. Tuyau ou pièce tubulaire muni d'un emboîtement d'extrémité (4, 5, 6, 7, 8, 10, 12) présentant une surface interne (5) et une surface externe (6) lisses et une épaisseur de paroi (e) sensiblement constante et égale à celle de la partie courante du fût (2), des parties de différentes courbures (4, 3, 10, 11, 12) et un rétrécissement (13, 14) à l'entrée de l'emboîtement, caractérisé en ce que, étant comme connu en soi, coulé par centrifugation, et en fonte ductile, il possède un emboîtement (3) en deux parties, une première partie évasée divergente (4, 7, 8, 10) venue de moulage et non déformée, et une seconde partie (12) courbe, déformée et raccordée tangentiellement à la première partie évasée (4, 7, 8, 10) venue de moulage, par une courbure (11) de flexion maximale dans laquelle le graphite de la fonte est resté sphéroïdal.

2. Tuyau ou pièce tubulaire suivant la revendication 1, caractérisé en ce que la première partie évasée divergente (4, 5, 6, 7, 8, 10) moulée par centrifugation constitue, avant déformation, une préforme (3ᵃ) à évasement tronconique (12ᵃ) d'épaisseur (e) sensiblement constante et égale à celle du fût (2).

**Claims**

1. Pipe or tubular member provided with a terminal socket (4, 5, 6, 7, 8, 10, 12) having a smooth inner surface (5) and a smooth outer surface (6) and a wall thickness (e) which is substantially constant and equal to that of the ordinary part of the body (2), parts of different curvature (4, 8, 10, 11, 12) and a contraction (13, 14) at the entrance to the socket, characterised in that being centrifugally cast, as known per se, and of ductile cast iron, it comprises a socket (3) in two parts, a first divergent flared part (4, 5, 6, 7, 8, 10) cast in one piece and non-deformed and a second curved part (12) which is deformed and connected tangentially to the first flared part (4, 5, 6, 8, 10), which is cast in one piece, by a curve (11) with maximum bending in which the graphite of the cast iron has remained spheroidal.

2. Pipe or tubular member according to claim 1, characterised in that the first divergent flared part (4, 5, 6, 7, 8, 10) produced by centrifugal casting constitutes, before deformation, a preform (3ª) with a frustoconical flare (12ª) of substantially constant thickness (e) equal to that of the body (2).

**Ansprüche**

1. Rohr oder rohrförmiges Teil mit einer Endmuffe (4, 5, 6, 7, 8, 10, 12) einschliesslich einer glatten Innenfläche (5), einer glatten Aussenfläche (6) und einer Wanddicke (e), die im wesentlichen Konstant und gleich derjenigen des durchlaufenden Teils des Schafts (5) ist, mit Teilen (4, 8, 10, 11, 12) von unterschiedlicher Krümmung und mit einer Verengung (13, 14) am Eintritt der Muffe, dadurch gekennzeichnet, dass es in an sich bekannter Weise durch Schleuderguss oder aus ziehbarem Gusseisen hergestellt ist und dass es eine Muffe (3) aus zwei Teilen aufweist, einem aufgeweiteten divergierenden gegossenen nichtverformten ersten Teil (4, 5, 6, 7, 8, 10) und einem gekrümmten verformten zweiten Teil (12), der sich mit einer Krümmung (11) maximaler Biegung, in der der Graphit des Gusseisens kugelförmig geblieben ist, tangential an den aufgeweiteten gegossenen ersten Teil (4, 5, 6, 8, 10) anschliesst.

2. Rohr oder rohrförmiges Teil nach Anspruch 1, dadurch gekennzeichnet, dass der aufgeweitete divergierende durch Schleuderguss hergestellte erste Teil (4, 5, 6, 7, 8, 10) vor der Verformung einen Vorformling (3ª) mit kegelstumpfförmiger Erweiterung (12ª) bildet, dessen Dicke (e) im wesentlichen konstant und gleich demjenigen des Schafts (2) ist.

0 019 256

FIG_1

FIG_2

FIG_3

FIG_4

0 019 256

FIG_5

FIG_6

FIG_7

FIG_8

2